(19) Europäisches Patentamt

European Patent Office

Office européen des brevets

(11) Publication number: **0 300 534 B1**

(12) EUROPEAN PATENT SPECIFICATION

(45) Date of publication of patent specification: **13.05.92**  (51) Int. Cl.⁵: **G06K  15/12**

(21) Application number: **88201373.3**

(22) Date of filing: **01.07.88**

(54) **Exposure device and printer with an LED array.**

(30) Priority: **07.07.87 NL 8701592**

(43) Date of publication of application:
**25.01.89 Bulletin  89/04**

(45) Publication of the grant of the patent:
**13.05.92 Bulletin  92/20**

(84) Designated Contracting States:
**DE FR GB IT NL**

(56) References cited:
**WO-A-87/02162**
**US-A- 4 455 562**

(73) Proprietor: **Océ-Nederland B.V.**
**St. Urbanusweg 43**
**NL-5914 CC Venlo(NL)**

(72) Inventor: **Reinten, Hans**
**Bernhardstraat 14**
**NL-5941 GL Velden(NL)**

(74) Representative: **Hanneman, Henri W.A.M. et al**
**Océ-Nederland B.V. Patents and Information**
**Postbus 101**
**NL-5900 MA Venlo(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an exposure device for the image-wise exposure of a photosensitive layer by means of an LED array, each LED in the array being energized in accordance with the image information to be reproduced, and to a printer comprising a photosensitive belt for forming images thereon by means of an exposure device, the images formed on the belt always being separated by gaps.

An exposure device of this kind is known from US patent 4 455 562. This known exposure device is used in an LED printer. In that printer an image is imaged line by line on a previously charged photoconductive layer by means of an array of LED's which together with part of their control electronics form part of an integrated circuit. Since not all the LED's emit the same amount of light in response to identical electrical energization, a control circuit is provided which controls the pulse time of each LED separately in conjunction with the (known) light emission of that LED. Less satisfactory LED's are energized with longer pulses and thus the total energy output per pulse of all the LED's is made equal.

Since the light emission of LED's decreases with use, the light emission of less satisfactory LED's will decline more rapidly than that of the good LED's.

In addition, the images for printing contain areas which are rarely covered with image parts, such as the edges, and areas which practically always contain image parts, e.g. the middle. LED's required to expose the edges are subjected to practically continuous loading, while LED's which have to expose the image parts are loaded less frequently. As a result of the said two effects the light emissions of the separate LED's will be subjected considerably to unequal changes over their life so that a simple aging compensation becomes impossible.

The object of the invention is to provide an exposure device and a printer in which all the LED's age equally so that a simple uniform aging compensation is possible. According to the invention this object is attained in an exposure device according to the preamble, by

- first means to determine the cumulative loading of each LED during a specific time interval,
- second means to determine, on the basis of the cumulative loading as determined, the cumulative loading of the LED or LED's in the array most highly loaded during said interval of time, such loading hereinafter being referred to as the maximum loading,

- third means to subject, on the basis of the maximum loading as determined, at least all the other LED's of the array to an extra loading in a correction interval after the specific time interval, so that after expiry of the correction interval all the LED's have experienced equal aging.

As a result, the differences in the light yield of the LED's due to aging change hardly or not at all. The decrease in the light yield of the LED's due to aging can now be simply compensated in respect of all the LED's, e.g. by lengthening all the energization pulses by an equal factor or increasing the supply current for all the LED's. For very rapid systems it is logical to effect the extra loading by the application of an increased supply current to the LED's. In this way the aging per unit of time will be greater and the extra loading can thus be completed in less time.

The invention also relates to a printer in which the exposure device according to the invention is used.

Other features and advantages of the exposure device according to the invention will be apparent from the following description with reference to the accompanying drawings, in which like references refer to like parts.

Fig. 1 is a diagrammatic representation of a printer provided with an exposure device according to the invention,

Fig. 2 is a sketch showing the principle of the exposure device according to the invention, and

Fig. 3 is a diagrammatic representation of the control unit of an exposure device according to the invention.

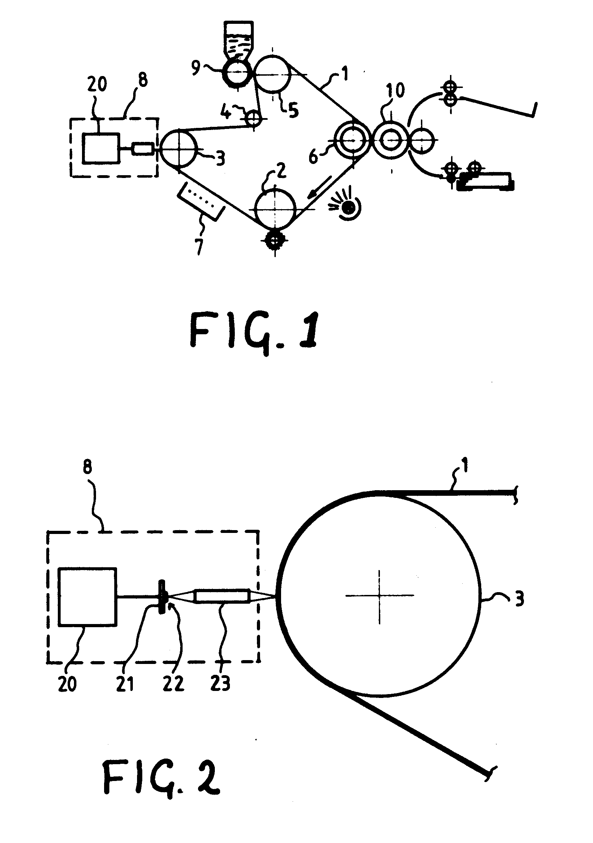

Fig. 1 is a diagrammatic representation of an electrophotographic printer provided with an exposure device according to the invention. The exposure device comprises a belt 1 to which a photoconductive layer has been applied and which is trained over five rollers 2, 3 4, 5 and 6. Roller 2 is connected to a motor (not shown) and drives the belt 1. The photoconductive belt 1 is given a uniform surface charge in a charging station 7 and is then exposed image-wise by the exposure device 8, so that charge flows away at the exposed places. A thin layer of toner powder is then applied to the unexposed places of the belt 1 in developer station 9, and is transferred to an fixed on a sheet of paper in the transfer station 10. Apart from the exposure device, which will be discussed in detail hereinafter, the electrophotographic process is assumed to be sufficiently well known and is not explained further here.

The exposure device 8 is illustrated in greater detail in Fig. 2. It comprises an LED array 21 with LED's 22 spaced apart 50 to 100 $\mu$m (the longitudi-

nal axis of the array is situated transversely of the drawing plane). The control signals for the LED's are supplied by the control unit 20.

Fig. 2 shows how the light from the LED's is projected on to the photoconductive belt 1. For this purpose a selfoc-array 23 is used, i.e. a row of optical fibres with a tapering refractive index, said fibres acting as a lens. Because of the drawing viewpoint only one fibre is visible. If a LED 22 of the array 21 is energized, its light impinges on the charged surface of the photoconductive belt 1, so that the charge flows away at that place. By energizing some of the LED's and not others at a specific time it is possible to form a linear charge image. These image lines are imaged one after another on the photoconductive belt moving on. The exposure is made in the form of light pulses each discharging a substantially round spot on the belt 1. In this connection it should be remembered that in commercially available LED arrays not all the LED's yield light of exactly the same intensity. Consequently, the degree of exposure of the photoconductive belt 1 will differ to each LED. To solve this problem the light emission of each LED is measured and stored in a memory. By reference to this information the pulse time for each LED is controlled separately during the exposure. LED's having a high light emission are thus energized with shorter pulses than LED's having a lower light emission. In this way the total energy output per pulse is made equal for all the LED's.

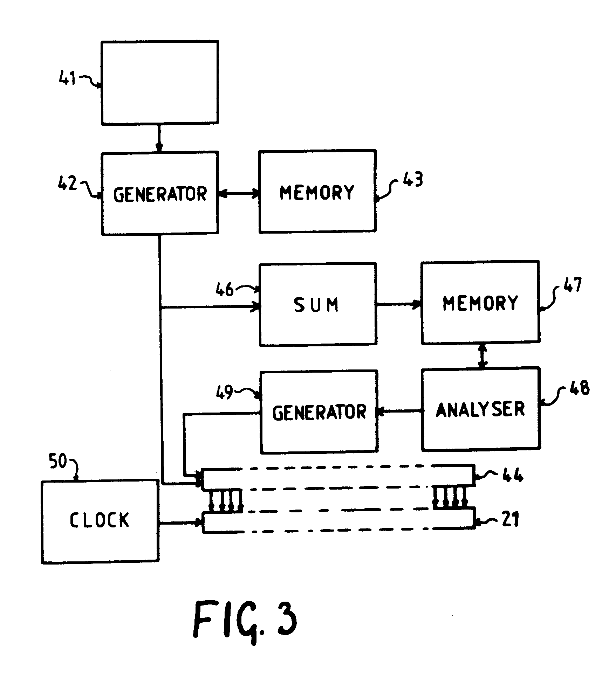

Fig. 3 is a diagrammatic representation of the control unit of an exposure device according to the invention as used in the printer according to Fig. 1. The image information is fed in the form of a raster signal from a signal source 41 to a signal processing circuit 42 connected to a memory 43. The output of signal processing circuit 42 is connected to a shift register 44 of the serial-in parallel-out type, the cells of which are each connected to a control circuit of an individual LED in the LED array 21, and to a summation circuit 46. The latter is connected to a cumulative memory 47. A signal generator 49 is connected on the one hand to an analyser 48 in turn connected to the cumalative memory 47, and on the other hand to the shift register 44. An image pulse generator 50 is connected to the control circuits in the LED array 21.

An image for printing is described by a matrix of image points which may be black or white. The image information is fed to the exposure device in the form of series of electrical binary signals (image lines) corresponding to the rows of the image matrix. Each image point in an image line corresponds to a specific LED in the exposure device. After an image line has been completely supplied, all the LED's are programmed according to the image points in the image line. An image point, for example, which is required to be white, is converted into an "on" signal for the corresponding LED, so that the latter exposes charge away from the photoconductive belt 1, so that it will no longer be developed at that place.

The signal source 41 feeds to the processing circuit 42 an image line consisting of the binary values of the image points on that line. The processing circuit 42 converts the value of each image point into a pulse time for the corresponding LED, taking into account the energy output of each LED as already described hereinbefore. The data required for this purpose is stored in the memory 43.

This signal, which therefore now consist of a series of pulse times, is fed to the shift register 44, the cells of which are each connected to the control circuit of an LED. On a pulse from the image puls generator 50 each LED is now energized for the programmed pulse time. The next image line is then processed in the same way.

Apart from being fed to the shift register 44, the signal from the processing circuit 42 is also fed to the summation circuit 46. The latter is connected to the cumulative memory 47, in which for each LED the sum of the pulse times already processed for the image in progress is stored. Each time a new image line is applied the summation circuit 46 adds the new pulse time for each LED to the total of processed pulse times and stores the result in the cumulative memory 47. When all the image lines of an image have been processed, the cumulative memory thus contains the cumulative loading which each LED experienced during that image. The analyser 48 now comes into operation. It reads out the total pulse time of each LED from the cumulative memory 47 and determines a number of extra pulses for each LED so that the sum of the total pulse time read out of the cumulative memory 47 and the extra pulse time becomes equal for all the LED's. This sum can be brought to a predetermined fixed value, but in view of the aging of the LED's it is better not to make the sum larger than strickly necessary. The following method is therefore used. The analyser 48 compares the total pulse times in the memory 47 and searches out the longest one. For the LED's having a shorter total pulse time the number of extra pulses required to bring them to a total pulse time equal to the longest total pulse time found is then determined. At the command of the analyser the signal generator 49 then generates image lines which are built up from the extra pulses required. These image lines are projected on to the photoconductive belt 1 behind the image just formed and are not processed by the printing system, and hence they are not developed and transferred. When all the LED's have been brought to a total pulse time equal to the longest total pulse time, the signal generator 49 stops operation and the printer is ready to reproduce a new image. All the LED's have now had an equal total pulse time and have therefore aged equally.

Although the invention has been explained by reference to the above example and the accompanying drawings, it is not restricted thereto. Numerous variations are possible within the scope of the claims, as will be apparent to the skilled addressee. For example, the total pulse time of each LED can also be calculated from the signal from the signal source 41 using the data in memory 43, instead of deriving the same from the signal from the processing circuit 42. The separate signal generator for the extra loading pulses can also be dispensed with if its function is performed by the electronics used for the image forming. In the example described, the interval of time over which the cumulative loading for each LED is determined, is equal to the time in which an image is exposed, and the correction interval in which the LED's subjected to less loading receive extra loading in the form of extra pulses, is equivalent to the time elapsing between forming the said image and the next image. Of course it is also possible to determine the cumulative loading of each LED over a longer interval of time, e.g. over 100 images, after which the extra loading can be effected within a sufficiently short time by applying an increased supply current.

## Claims

1. An exposure device for the image-wise exposure of a photosensitive layer by means of an LED array, each LED in the array being energized in accordance with the image information to be reproduced, characterised by:
   - first means (46, 47) to determine the cumulative loading of each LED during a specific time interval,
   - second means (48) to determine, on the basis of the cumulative loading as determined, the cumulative loading of the LED or LED's in the array most highly loaded during said interval of time, such loading hereinafter being referred to as the maximum loading,
   - third means (49) to subject, on the basis of the maximum loading as determined, at least all the other LED's of the array to an extra loading in a correction interval after the specific time interval, so that after expiry of the correction interval all the LED's have experienced equal aging.

2. An exposure device according to claim 1, in which the LED's are energized by a fixed supply current during exposure of the photosensitive layer, characterised in that in order to determine the cumulative loading or maximum loading respectively it is the cumulative energization time or maximum energization time respectively that is determined.

3. An exposure device according to claim 2, characterised in that the extra loading is an energization for a time which makes the cumulative energization time after expiry of the correction interval equal for all the LED's.

4. An exposure device according to claim 3, characterised in that the extra energization time for each LED is equal to the difference between the maximum energization time and the cumulative energization time of that LED.

5. An exposure device according to any one of the preceding claims, characterised in that the extra loading of the LED's is effected by application of an increased supply current to the LED's.

6. A printer comprising a photosensitive belt for forming images thereon by means of an exposure device according to any one of the preceding claims, the images formed on the belt always being separated by gaps, characterised in that the said time interval is the time required for exposing at least one image on the belt (1) by the exposure device (8) and the correction interval is situated in the time during which a gap on the belt (1) passes the exposure device (8).

## Revendications

1. Dispositif d'exposition pour l'exposition sous forme d'image d'une couche photosensible au moyen d'un réseau de diodes électroluminescentes, chaque diode électroluminescente dans le réseau étant alimentée en fonction de l'information d'image à reproduire, caractérisé par :
   - des premiers moyens (46, 47) pour déterminer la charge cumulative de chaque diode électroluminescente pendant un intervalle de temps spécifique ;
   - des seconds moyens (48) pour déterminer, sur la base des charges cumulatives telles qu'elles ont été déterminées, la charge cumulative de la ou des diodes électroluminescentes dans le réseau, les plus fortement chargées pendant ledit intervalle de temps, une telle charge étant désignée ci-après comme la charge maximale ;

- des troisièmes moyens (49) pour soumettre, sur la base de la charge maximale telle qu'elle a été déterminée, au moins toutes les autres diodes électroluminescentes du réseau à une charge supplémentaire pendant un intervalle de correction après l'intervalle de temps spécifique, de telle façon qu'après l'expiration de l'intervalle de correction, toutes les diodes électroluminescentes ont subi le même vieillissement.

2. Dispositif d'exposition suivant la revendication 1, dans lequel les diodes électroluminescentes sont alimentées par un courant d'alimentation fixe, pendant l'exposition de la couche photosensible, caractérisé en ce que, dans le but de déterminer la charge cumulative ou la charge maximale respectivement, c'est la durée d'alimentation cumulative ou la durée d'alimentation maximale respectivement qui est déterminée.

3. Dispositif d'exposition suivant la revendication 2, caractérisé en ce que la charge supplémentaire est une alimentation pendant une durée qui rend les durées cumulatives d'alimentation après l'expiration de l'intervalle de correction égales pour toutes les diodes électroluminescentes.

4. Dispositif d'exposition suivant la revendication 3, caractérisé en ce que la durée d'alimentation supplémentaire pour chaque diode électroluminescente est égale à la différence entre la durée d'alimentation maximale et la durée d'alimentation cumulative de cette diode électroluminescente.

5. Dispositif d'exposition suivant l'une quelconque des revendications précédentes, caractérisé en ce que la charge supplémentaire des diodes électroluminescentes est effectuée par l'application d'un courant d'alimentation augmenté aux diodes électroluminescentes.

6. Imprimante comprenant une bande photosensible pour former des images sur sa surface au moyen d'un dispositif d'exposition suivant l'une quelconque des revendications précédentes, les images formées sur la bande étant toujours séparées par des espaces, caractérisée en ce que ledit intervalle de temps est le temps nécessaire pour exposer au moins une image sur la bande (1) par le dispositif d'exposition (8) et l'intervalle de correction est situé dans le temps pendant lequel un espace sur la bande passe devant le dispositif d'exposition (8).

## Patentansprüche

1. Belichtungsvorrichtung für die bildmäßige Belichtung einer lichtempfindlichen Schicht mit Hilfe einer Leuchtdiodenanordnung, bei der jede Leuchtdiode der Anordnung entsprechend der wiederzugebenden Bildinformation erregt wird, **gekennzeichnet** durch:

- erste Mittel (46,47) zur Bestimmung der kumulierten Belastung jeder Leuchtdiode während eines bestimmten Zeitintervalls,
- zweite Mittel (48) zur Bestimmung, auf der Grundlage der so bestimmten kumulierten Belastungen, der kumulierten Belastung derjenigen Leuchtdiode oder Leuchtdioden in der Anordnung, die während des Zeitintervalls am stärksten belastet war, welche Belastung nachfolgend als maximale Belastung bezeichnet werden soll,
- dritte Mittel (49), um auf der Grundlage der so bestimmten maximalen Belastung wenigstens alle anderen Leuchtdioden der Anordnung innerhalb eines Korrekturintervalls nach dem bestimmten Zeitintervall einer zusätzlichen Belastung zu unterziehen, so daß nach Ablauf des Korrekturintervalls alle Leuchtdioden die gleiche Alterung erfahren haben.

2. Belichtungsvorrichtung nach Anspruch 1, bei der die Leuchtdioden während der Belichtung der lichtempfindlichen Schicht durch einen festen Versorgungsstrom erregt werden, dadurch **gekennzeichnet,** daß für die Bestimmung der kumulierten Belastung bzw. der maximalen Belastung die kumulierte Erregungszeit bzw. die maximale Erregungszeit bestimmt wird.

3. Belichtungsvorrichtung nach Anspruch 2, dadurch **gekennzeichnet,** daß die zusätzliche Belastung eine Erregung für eine Zeit ist, durch die die kumulierten Erregungszeiten nach Ablauf des Korrekturintervalls für alle Leuchtdioden gleich werden.

4. Belichtungsvorrichtung nach Anspruch 3, dadurch **gekennzeichnet,** daß die zusätzliche Erregungszeit für jede Leuchtdiode gleich der Differenz zwischen der maximalen Erregungszeit und der kumulierten Erregungszeit dieser Leuchtdiode ist.

**5.** Belichtungsvorrichtung nach einem der vorstehenden Ansprüche, dadurch **gekennzeichnet,** daß die zusätzliche Belastung der Leuchtdioden durch Anlegen einer erhöhten Versorgungsspannung an die Leuchtdioden bewirkt wird.

**6.** Drucker mit einem lichtempfindlichen Band für die Erzeugung von Bildern hierauf mit Hilfe einer Belichtungsvorrichtung nach einem der vorstehenden Ansprüche, bei dem die auf dem Band erzeugten Bilder stets durch Zwischenräume getrennt sind, dadurch **gekennzeichnet,** daß das Zeitintervall die für die Belichtung wenigstens eines Bildes auf dem Band (1) mit Hilfe der Belichtungsvorrichtung (8) benötigte Zeit ist und daß das Korrekturintervall in der Zeit liegt, in der ein Zwischenraum auf dem Band (1) die Belichtungsvorrichtung (8) passiert.

FIG. 1

FIG. 2

FIG. 3